# EUROPÄISCHE PATENTSCHRIFT

(11) **EP 0 673 480 B1**
(45) Veröffentlichungstag und Bekanntmachung des Hinweises auf die Patenterteilung: **23.10.1996**
(21) Anmeldenummer: 94902764.3
(22) Anmeldetag: 11.12.1993
(51) Int. Cl.: F16H 3/093, F16H 37/04

(54) **UNTER LAST SCHALTBARES, MEHRGÄNGIGES WENDEGETRIEBE**
MULTI-STAGE REVERSING GEAR CHANGEABLE UNDER LOAD
BOITE D'INVERVSION A VITESSES MULTIPLES OU LES VITESSES PEUVENT ETRE CHANGEES SOUS CHARGE

(30) Priorität: 18.12.1992 DE 4242941
(43) Veröffentlichungstag der Anmeldung: 27.09.1995
(73) Patentinhaber: ZF FRIEDRICHSHAFEN Aktiengesellschaft, D-88038 Friedrichshafen (DE)
(72) Erfinder: REBHOLZ, Wolfgang, D-88045 Friedrichshafen (DE); LEBER, Fritz, D-88048 Friedrichshafen (DE)
(86) Internationale Anmeldenummer: EP9303509
(87) Internationale Veröffentlichungsnummer: WO9415115

(56) Entgegenhaltungen:
- EP-A- 0 293 248
- US-A- 3 858 455
- Prospekt der Firma Spicer Transmission: Compact shuttle, 4-speed synchronized power transmission, Impressum Techwrite/2000/05/58

## Beschreibung

Die Erfindung betrifft ein lastschaltbares, mehrgängiges Wendegetriebe, wie es insbesondere in Baumaschinen, wie z. B. Baggern, eingesetzt wird. Das Getriebe verfügt über eine Eingangswelle und einen Wendesatz, bestehend aus einer Vorgelegewelle und Festrädern sowie Schaltkupplungen mit Losrädern zur Ankopplung eines dieser Losräder an die Eingangs- oder Vorgelegewelle. Auf diese Weise kann die Drehrichtung einer Ausgangswelle geändert werden. Ferner ist dem Wendesatz des Wendegetriebes ein Wechselgetriebe mit Synchronschaltkupplungen nachgeschaltet. Hierbei handelt es sich vorzugsweise um ein Wechselgetriebe mit vier Gängen.

Lastschaltbare Wendegetriebe zeichnen sich durch eine Reihe von Vorteilen aus. Deswegen werden derartige Getriebe bei vielen Nutzfahrzeugen eingesetzt. Der Wendesatz erlaubt in Verbindung mit einem hydrodynamischen Drehmomentwandler ein ruckfreies Anfahren und Reversieren unter Last. Wenn dem lastschaltbaren Wendegetriebe ein Wechselgetriebe mit Synchronschaltkupplungen nachgeschaltet ist, kann der Fahrer einen dem Einsatz entsprechenden Gang schalten. Beispielsweise wird bei einem Bagger im ersten oder zweiten Gang gearbeitet, während der dritte und vierte Gang für Transportfahrten zur Verfügung steht.

Die Vielfalt der Arbeitsmaschinen verlangt einen immer höheren Grad der Anpassungsfähigkeit des Getriebes. Nachteilig ist insbesondere, daß der Einbauraum beträchtlich sein kann, was insbesondere auf eine beträchtliche axiale Länge und/oder Breite dieser Getriebe zurückzuführen ist.

Der vorliegenden Erfindung liegt die Aufgabe zugrunde, ein unter Last schaltbares, mehrgängiges Wendegetriebe mit einem nachgeschalteten Wechselgetriebe mit Synchronschaltkupplungen zum Schalten von mindestens vier Gängen zu schaffen, das sich insbesondere durch einen geringen Bauraum auszeichnet.

Die der Erfindung zugrunde liegende Aufgabe wird durch die im Anspruch 1 aufgeführten Merkmale gelöst, wobei die Losräder des Wendesatzes mit einem Festrad, dem Antriebsrad, einer Vorgelegewelle des Wechselgetriebes in ständig kämmender Verbindung stehen. Um eine kompakte Bauweise zu erzielen, sind - bezogen auf die axiale Längenerstreckung der Vorgelegewelle - auf einer Seite dieses Antriebsrades zwei weitere Festräder und auf der anderen Seite dieses Antriebsrades zwei Losräder angeordnet. Die Festräder weisen hierbei einen kleinen Durchmesser auf und bilden die Eingangsräder für die Gangstufen 1 und 2. Für diese Gänge lassen sich große Übersetzungen ins Langsame erzielen, da die kleinsten einzuhaltenden Durchmesser dieser Zahnräder nicht von Bauteilen der Synchronkupplung bestimmt werden, wie dies bei den Losrädern der Fall ist. Bei den Gangstufen 3 und 4 werden die Eingangsräder von den Losrädern gebildet. Hier können größere Durchmesser zur Anwendung gelangen, so daß die Synchronschaltkupplung konstruktiv problemlos untergebracht werden kann. Die Gangstufen 1 bis 4 werden durch zwei Losräder auf der Ausgangswelle und zwei weitere Festräder auf der Ausgangswelle vervollständigt. Die Losräder der Ausgangswelle weisen wiederum größere Durchmesser auf, so daß eine Synchronschaltkupplung problemlos eingebaut werden kann. Die Festräder auf der Ausgangswelle, die Bestandteil der Gangstufen 3 und 4 sind, weisen wiederum kleinere Durchmesser auf. Es ist ohne weiteres ersichtlich, daß auf diese Weise ein großer Gesamtgangsprung erreicht werden kann.

Aus dem Prospekt der Firma Spicer Transmission Division: COMPACT SHUTTLE (Impressum Techwrite/2000/05/58) ist ein lastschaltbares, mehrgängiges Wendegetriebe bekannt geworden. Bei diesem Getriebe sind auf der Eingangswelle eine Doppelkupplung und zwei Losräder angeordnet. Jedes Losrad steht mit einem Festrad einer vorgelegewelle in kämmendem Eingriff. Durch wechselweises Schließen der Doppelkupplung ist die Drehrichtung umkehrbar. Dem Wendegetriebe ist ein Wechselgetriebe mit Synchronschaltkupplungen nachgeschaltet, mit dem vier Gänge geschaltet werden können. Bei diesem bekannten Getriebe ist die axiale Baulänge beträchtlich.

Bei einer bevorzugten Ausführungsform des erfindungsgemäßen Getriebes sind die Festräder mit der Vorgelegewelle einstückig gefertigt. Hiermit sind Verzahnungen mit sehr kleinen Durchmessern fertigungstechnisch einfach zu realisieren. Analog hierzu ist es vorteilhaft, die Festräder der Ausgangswelle mit dieser einstückig herzustellen.

In vorteilhafter Weise werden die Zahnräder mit den größeren Durchmessern als Losräder ausgeführt. Es ist dann vorteilhaft, jeweils zwei Losräder auf der Vorgelegewelle und der Ausgangswelle zu lagern und diesen jeweils eine Synchronschaltkupplung zuzuordnen.

Wenn die Antriebsverbindung zwischen den Losrädern des Wendesatzes und dem Festrad der Vorgelegewelle mit einer Übersetzung ins Langsame erfolgt, können die Zahnradpaare des dritten und vierten Ganges ins Schnelle übersetzen, ohne daß hierbei die Abtriebsdrehzahl zu hoch wird. Dabei kann die Übersetzung im vierten Gang so gewählt werden, daß der Gesamtgangsprung des Getriebes (zwischen dem ersten und dem vierten Gang) über lediglich zwei Stufen erzielt werden kann.

Um eine kompakte Bauweise zu erzielen, entspricht der Achsabstand zwischen der Vorgelegewelle und der Ausgangswelle etwa dem Radius des - bezogen auf die Längenerstreckung des Getriebes - mittig angeordneten Festrades.

Eine einfache Bauweise liegt dann vor, wenn mit der Ausgangswelle ein Abtriebsflansch fest verbunden ist. Bei Bedarf kann auf der Ausgangswelle ein weiteres Festrad angeordnet sein, über das bedarfsweise eine weitere Antriebswelle angetrieben werden kann. Hierbei kann es sich beispielsweise um den Antrieb einer Vorderachse handeln. Das erfindungsgemäße Getriebe kann wegen seiner kompakten Bauweise insbesondere in einem Nutzfahrzeug, wie einem Baggerlader, mit Vorteil eingesetzt werden.

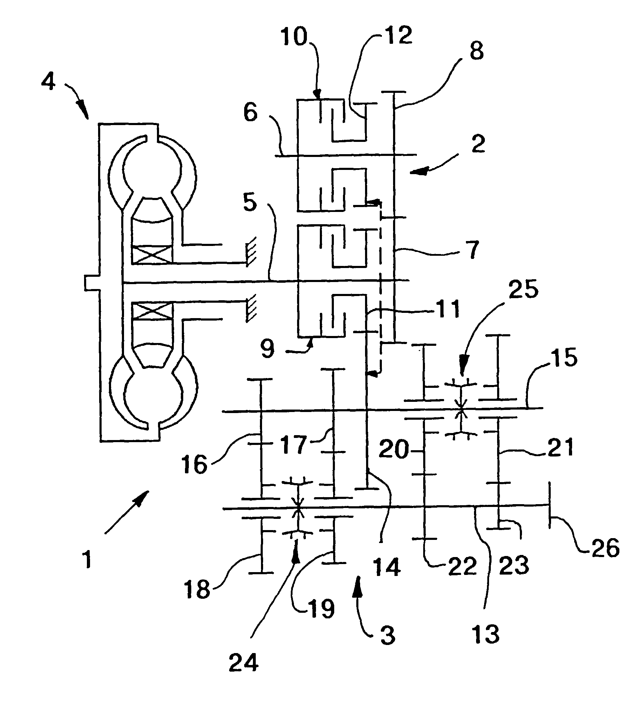

Weitere, für die Erfindung wesentliche Merkmale sowie die daraus resultierenden Vorteile sind der nachfolgenden Beschreibung eines Ausführungsbeispiels anhand der Zeichnung zu entnehmen.

In der Zeichnung ist ein Getriebeschema eines lastschaltbaren Wendegetriebes 1 abgebildet. Es handelt sich um ein mehrgängiges Wendegetriebe, das prinzipiell aus einem Wendesatz 2 und einem dem Wendesatz nachgeschalteten Wechselgetriebe 3 besteht. Dem Wendegetriebe 1 kann ein hydrodynamischer Drehmomentwandler 4 vorgeschaltet sein, was beispielsweise bei schweren Baufahrzeugen im allgemeinen üblich ist.

Der Wendesatz 2 wird im einzelnen aus einer Eingangswelle 5 des Wendegetriebes, einer hierzu parallel verlaufenden Vorgelegewelle 6, zwei Festrädern 7 und 8, zwei Schaltkupplungen 9 und 10 sowie zwei Losrädern 11 und 12 gebildet.

Das Festrad 7 ist drehfest mit der Eingangswelle 5 verbunden. Das Festrad 8 ist auf der Vorgelegewelle 6 drehfest angeordnet. Über die Schaltkupplung 9 kann das Losrad 11 drehfest an die Eingangswelle 5 angekuppelt werden, während bei geschlossener Schaltkupplung 10 das Losrad 12 drehfest an die Vorgelegewelle 6 angeschlossen ist.

Bei den Schaltkupplungen 9 und 10 handelt es sich vorzugsweise um hydraulisch gegen die Kraft von Federn im Schließsinne betätigbare Lamellenkupplungen.

Bei den Schaltkupplungen 9 und 10 handelt es sich um sogenannte Richtungskupplungen, weil mit ihnen die Drehrichtung einer Ausgangswelle 13 des Wendegetriebes 1 bestimmt werden kann. Bei Vorwärtsfahrt ist die Schaltkupplung 9 geschlossen, während zum Reversieren die Schaltkupplung 10 betätigt wird, während die Schaltkupplung 9 geöffnet bleibt.

Aus der schematischen Darstellung ist ersichtlich, daß das Losrad 11 in ständig kämmender Verbindung mit einem Festrad 14 einer Vorgelegewelle 15 steht. Dies trifft ebenfalls für das Losrad 12 der Vorgelegewelle 6 zu. Auch dieses Zahnrad steht mit dem Festrad 14 in ständigem Zahneingriff, was durch die in der Zeichnung mit gestrichelten Linien eingezeichnete Verbindung verdeutlicht werden soll.

Auf der Vorgelegewelle 15 des Wechselgetriebes 3 sind auf einer Seite des Festrades 14 (links davon) zwei weitere Festräder 16 und 17 angeordnet. Bei diesen Festrädern handelt es sich um die Antriebsräder für die erste und zweite Gangstufe des Getriebes. Da es sich hier um große Übersetzungsstufen ins Langsame handelt, ist es notwendig, daß diese Festräder kleine Durchmesser aufweisen. Hierbei handelt es sich um Durchmesser, die kleiner als die von Losrädern sind, deren kleinstmögliche Durchmesser durch die Losradlagerungen bzw. durch die Synchronisierungen begrenzt werden. Deswegen ist es vorteilhaft, die Festräder 16 und 17 mit der Vorgelegewelle einstückig herzustellen.

Die Festräder 16 und 17 stehen in ständigem Zahneingriff mit Losrädern 18 und 19, die drehbar auf der Ausgangswelle 13 gelagert sind. Durch die Losräder 18 und 19 werden die Gangstufen 1 und 2 vervollständigt. Die Losräder 18 und 19 können über eine Synchronschaltkupplung 24 wahlweise drehfest mit der Ausgangswelle 13 verbunden werden, so daß entweder der erste oder der zweite Gang geschaltet ist.

Die Übersetzung zwischen den Losrädern 11 bzw. 12 und dem Festrad 14 ist so gewählt, daß eine Übersetzung ins Langsame erfolgt. Deshalb ist es möglich, die Gangstufen 3 und 4 ins Schnelle zu übersetzen, ohne daß die Abtriebsdrehzahl des Getriebes zu hoch wird. Die dritte und vierte Gangstufe wird aus zwei Losrädern 20 und 21 und zwei Festrädern 22 und 23 gebildet. Die Losräder 20 und 21 sind drehbar auf der Vorgelegewelle 15 gelagert. Jeweils eines dieser Losräder läßt sich über eine weitere Synchronschaltkupplung 25 drehfest mit der Vorgelegewelle 15 verbinden. Da die Durchmesser der Festräder 22 und 23 - analog zu den Festrädern 16 und 17 - nicht durch Radlagerungen oder Bauteile der Synchronisierung auf einen kleinstmöglichen Raddurchmesser begrenzt sind, ist es auch hier möglich, große Übersetzungsstufen für den dritten bzw. vierten Gang bereitzustellen. Auch hier ist es vorteilhaft, die Festräder 22 und 23 einstückig mit der Ausgangswelle 13 herzustellen.

Der Gesamtgangsprung des Wendegetriebes 1 zwischen dem ersten und vierten Gang, der bei den angesprochenen Nutzfahrzeugen sehr groß sein muß, kann durch die Radpaarungen 16-18 und 21-23, d. h. in lediglich zwei Stufen, problemlos erreicht werden. Mit der Ausgangswelle 13 ist ein Abtriebsflansch 26 drehfest verbunden, was zu einer einfachen Bauweise des Getriebes beiträgt.

Bei einer abgewandelten Ausführungsform könnte zwischen den Los- und Festrädern der Ausgangswelle 13 ein weiteres Festrad zum Antrieb einer bedarfsweise zuschaltbaren Antriebswelle angeordnet sein. Hierbei könnte es sich beispielsweise um den Antrieb einer Vorderachse handeln.

## Patentansprüche

1. Unter Last schaltbares mehrgängiges Wendegetriebe mit einer ein Festrad (7) und ein Losrad (11) tragenden Eingangswelle (5) und einer ein Festrad (8) und ein Losrad (12) tragenden Vorgelegewelle (6), bei dem die beiden Festräder (7, 8) ständig miteinander kämmen und bei dem die Losräder (11, 12) über zugeordnete Schaltkupplungen (8, 10) mit der Eingangswelle bzw. der Vorgelegewelle koppelbar sind und somit das Wendegetriebe bilden, dem ein eine Ausgangswelle (13) aufweisendes Wechselgetriebe (3) nachgeschaltet ist, welches Synchronschaltkupplungen zum Schalten von mindestens vier Gängen aufweist, wobei
- beide Losräder (11, 12) des Wendegetriebes mit einem auf einer Vorgelegewelle (15) sitzenden eingangsseitigen Festrad (14) des Wechselgetriebes (3) ständig kämmen;
- und daß - bezogen auf die Längenerstreckung der Vorgelegewelle (15) des Wechselgetriebes - auf einer Seite des eingangsseitigen Festrades (14) zwei weitere Festräder (16, 17) kleinen Durchmessers und auf der anderen Seite des eingangsseitigen Festrades (14) zwei weitere Losräder (20, 21) größeren Durchmessers angeordnet sind;
- und daß die zwei weiteren Festräder (16, 17) mit zwei auf der Ausgangswelle (13) sitzenden Losrädern (18, 19) größeren Durchmessers und die zwei weiteren Losräder (20, 21) mit zwei auf der Ausgangswelle (13) sitzenden Festrädern (22, 23) kleineren Durchmessers in ständigem zahneingriff stehen.

2. Getriebe nach Anspruch 1, dadurch **gekennzeichnet**, daß die Festräder (16, 17) mit der Vorgelegewelle (15) einstückig hergestellt sind.

3. Getriebe nach Anspruch 1, dadurch **gekennzeichnet,** daß die Festräder (22, 23) mit der Ausgangswelle (13) einstückig hergestellt sind.

4. Getriebe nach Anspruch 1, dadurch **gekennzeichnet**, daß den Losrädern (20, 21) der Vorgelegewelle (15) und den Losrädern (18, 19) der Ausgangswelle (13) jeweils eine Synchronschaltkupplung (25, 24) zugeordnet ist.

5. Getriebe nach Anspruch 1, dadurch **gekennzeichnet**, daß die Antriebsverbindung zwischen den Losrädern (11, 12) des Wendesatzes und dem Festrad (14) der Vorgelegewelle (15) mit einer Übersetzung ins Langsame erfolgt.

6. Getriebe nach den Ansprüchen 1 und 5, dadurch **gekennzeichnet**, daß die Antriebsverbindung zwischen den Losrädern (20, 21) der Vorgelegewelle (15) und den Festrädern (22, 23) der Ausgangswelle (13) mit einer Übersetzung ins Schnelle erfolgt.

7. Getriebe nach Anspruch 1, dadurch **gekennzeichnet**, daß der Achsabstand zwischen der Vorgelegewelle (15) und der Ausgangswelle (13) etwa dem Radius des mittig angeordneten Festrades (14) entspricht.

8. Getriebe nach Anspruch 1, dadurch **gekennzeichnet**, daß mit der Ausgangswelle (13) ein Abtriebsflansch (26) fest verbunden ist.

9. Getriebe nach Anspruch 1, dadurch **gekennzeichnet**, daß zwischen den Los- und Festrädern der Ausgangswelle (18, 19 und 22, 23) ein weiteres Festrad zum Antrieb einer bedarfsweise zuschaltbaren Antriebswelle angeordnet ist.

10. Getriebe nach Anspruch 1, **gekennzeichnet** durch die Verwendung in einem Baggerlader.

## Claims

1. Power shift, multi-speed reversing gearbox having an input shaft (5) carrying a fixed wheel (7) and a loose wheel (11) and having a layshaft (6) carrying a fixed wheel (8) and a loose wheel (12), in which the two fixed wheels (7, 8) constantly mesh with one another and the loose wheels (11, 12) may be coupled by associated clutches (8, 10) to the input shaft and the layshaft respectively and hence form the reversing gearbox, downstream of which is connected a speed-change gearbox (3) comprising an output shaft (13) and synchronous clutches for selecting at least four speeds, wherein
- both loose wheels (11, 12) of the reversing gearbox constantly mesh with an input-side fixed wheel (14) of the speed-change gearbox (3) which is seated on a layshaft (15);
- and that there are disposed - in relation to the longitudinal extension of the layshaft (15) of the speed-change gearbox - on one side of the input-side fixed wheel (14) two further fixed wheel (16, 17) of small diameter and on the other side of the input-side fixed wheel (14) two further loose wheels (20, 21) of larger diameter;
- and that the two further fixed wheels (16, 17) are constantly meshed with two loose wheels (18, 19) of larger diameter seated on the output shaft (13) and the two further loose wheels (20, 21) are constantly meshed with two fixed wheels (22, 23) of smaller diameter seated on the output shaft (13).

2. Gearbox according to claim 1, characterized in that the fixed wheels (16, 17) are manufactured integrally with the layshaft (15).

3. Gearbox according to claim 1, characterized in that the fixed wheels (22, 23) are manufactured integrally with the output shaft (13).

4. Gearbox according to claim 1, characterized in that synchronous clutches (25, 24) are associated with the loose wheels (20, 21) of the layshaft (15) and with the loose wheels (18, 19) of the output shaft (13) respectively.

5. Gearbox according to claim 1, characterized in that the drive connection between the loose wheels (11, 12) of the reversing assembly and the fixed wheel (14) of the layshaft (15) is effected with a gearing down.

6. Gearbox according to claims 1 and 5, characterized in that the drive connection between the loose wheels (20, 21) of the layshaft (15) and the fixed wheels (22, 23) of the output shaft (13) is effected with a gearing up.

7. Gearbox according to claim 1, characterized in that the shaft-centre distance between the layshaft (15) and the output shaft (13) corresponds approximately to the radius of the centrally disposed fixed wheel (14).

8. Gearbox according to claim 1, characterized in that an output flange (26) is firmly connected to the output shaft (13).

9. Gearbox according to claim 1, characterized in that disposed between the loose and fixed wheels of the output shaft (18, 19 and 22, 23) is a further fixed wheel for driving a drive shaft which, when required, is connectable to the system.

10. Gearbox according to claim 1, characterized by its use in a combined digger-loader.

## Revendications

1. Réducteur-inverseur à plusieurs vitesses, couplable sous charge, avec un arbre d'entrée (5) portant un pignon fixe (7) et un pignon fou (11) et avec un arbre de renvoi (6) portant un pignon fixe (8) et un pignon fou (12), sur lequel les deux pignons fixes (7, 8) engrènent de façon continue l'un avec l'autre et sur lequel les pignons fous (11, 12) peuvent être solidarisés avec l'arbre d'entrée ou l'arbre de renvoi par l'intermédiaire d'embrayages (8, 10), formant ainsi le réducteur-inverseur sur lequel est monté en aval un engrenage à changement de vitesses (3) avec arbre de sortie (13) présentant un embrayage de synchronisation pour le passage d'au moins quatre vitesses, sachant que:
- les deux pignons fous (11, 12) du réducteur-inverseur sont en prise continue avec un pignon fixe (14) de la boîte de vitesses (3), monté côté entrée sur un arbre de renvoi (15);
- et que - par rapport à l'extension en longueur de l'arbre de renvoi (15) de l'engrenage à changement de vitesses - deux autres pignons fixes (16, 17) de petit diamètre sont montés d'un côté du pignon fixe (14) placé côté entrée et que deux autres pignons fous (20, 21) de plus grand diamètre sont montés de l'autre côté du pignon fixe (14) placé côté entrée;
- et que les deux autres pignons fixes (16, 17) sont en prise continue avec deux pignons fous (18, 19) de plus grand diamètre, montés sur l'arbre de sortie (13) et que les deux autres pignons fous (20, 21) sont en prise continue avec deux pignons fixes (22, 23) de plus petit diamètre, montés sur l'arbre d'entrée (13).

2. Réducteur selon la revendication 1, **caractérisé** en ce que les pignons fixes (16, 17) forment une pièce unitaire avec l'arbre de renvoi (15).

3. Réducteur selon la revendication 1, **caractérisé** en ce que les pignons fixes (22, 23) forment une pièce unitaire avec l'arbre de sortie (13).

4. Réducteur selon la revendication 1, **caractérisé** en ce qu'un embrayage synchronisé (25, 24) est respectivement appliqué aux pignons fous (20, 21) de l'arbre de renvoi (15) et aux pignons fous (18, 19) de l'arbre de sortie (13).

5. Réducteur selon la revendication 1, **caractérisé** en ce que la liaison motrice entre les pignons fous (11, 12) du groupe inverseur et le pignon fixe (14) de l'arbre de renvoi (15) s'effectue avec un rapport de démultiplication.

6. Réducteur selon les revendications 1 et 5, **caractérisé** en ce que la liaison motrice entre les pignons fous (20, 21) de l'arbre de renvoi (15) et les pignons fixes (22, 23) de l'arbre de sortie (13) s'effectue avec un rapport de multiplication.

7. Réducteur selon la revendication 1, **caractérisé** en ce que l'entraxe entre l'arbre de renvoi (15) et l'arbre de sortie (13) correspond environ au rayon du pignon fixe (14) placé au centre.

8. Réducteur selon la revendication 1, **caractérisé** en ce qu'une bride de sortie (26) est solidement fixée à l'arbre de sortie (13).

9. Réducteur selon la revendication 1, **caractérisé** en ce qu'un autre pignon fixe pour l'entraînement d'un arbre d'entrée couplable au besoin est monté entre les pignons fixes et les pignons fous de l'arbre de sortie (18, 19, et 22, 23).

10. Réducteur selon la revendication 1, **caractérisé** par l'utilisation dans une pelle chargeuse.
